# EUROPEAN PATENT APPLICATION

(11) **EP 1 398 932 A1**
(43) Date of publication of application: **17.03.2004**
(21) Application number: 02020332.9
(22) Date of filing: 11.09.2002
(51) Int. Cl.: H04L 29/06

(54) **Multinet session magagement**

(71) Applicant: Web. De AG, 76227 Karlsruhe (DE)
(72) Inventor: Schneider, Uwe, Dr., 76356 Weingarten (DE); Hoffmann, Jürgen, Dr., 76137 Karlsruhe (DE); Maurer, Uwe, Dipl. Inform., 76135 Karlsruhe (DE)
(74) Representative: Schnekenbühl, Robert Matthias L.

(57) **Abstract**

A multinet session management device for registration of communications of a specific entity in at least two communications environments.

## Description

### Field of the invention

In general, the present invention relates to communications of a specific entity performed in or via different communications environments. In particular, the present invention relates to a registration of such communications of the specific entity.

### Background of the invention

A user can communicate by means of different communications media in different communications environments such as mobile and stationary telephone networks, computer-based networks such as the Internet, different computer-based communications services such as E-mail, FTP and the like. For periods of time, a user can be contacted by means of communications in one or several of different communications environments. Further, the user can simultaneously and/or subsequently employ different communications environments for communications purposes. For using a communications environment, a user establishes, maintains and terminates individual sessions associated to the user and associated to a communications related context. Actions and events occurring in such a session in one communications environment take place independently from actions and events in a session of another communications environment. This is mainly due to the fact that different communications environments are operated independently from each other.

For example, a session performed by means of a telephone, for example in a PSTN-based, GSM or UMTS communications environment, lasts as long as the user of the telephone maintains the current telephone communications link thereto. A session in a computer-based communications environment, for example the Internet, lasts as long as the user who has initiated that session maintains a respective communications link, for example to an Internet provider or to a web site. Although the user can perform these different sessions at the same time, it is not possible to provide information concerning a session in one of the employed communications environments to another employed communications environment. Rather, information concerning sessions of a communications environment is only available within that communications environment due to its closed character.

### Object of the invention

The object of the present invention is to provide for solutions for making information available concerning communications performed in a communications environment outside that communications environment. In particular, the present invention should allow to make information regarding communications performed in different communications environments available outside these communications environments and available for access by at least one of these communications environments.

### Short description of the invention

The basic principle underlying the present invention to solve the above object is to employ a multinet session management, a multinet session management device or a multinet session management method which serve to link independent sessions in different communications environments and contexts associated thereto in any manner. The present invention allows for an assignment of sessions and session contexts of different communications environments to a specific entity. As a result, communications of a specific entity and related sessions and contexts respectively, can be searched, traced and found in the respective communications environment. Further, the present invention makes it possible to control a session or communication in or of a communications environment beyond the boundaries of that communications environment. For example, using the present invention enables the indication of a telephone-based communication/session in a telephone network by means of a personal computer and a browser executed thereon, respectively, via a computer-based communications environment such as the Internet. This can be accomplished by search-ing/tracing/finding the telephone communication/session by means of the multinet session management according to the present invention.

It is contemplated that the multinet session management according to the present invention can represent an "authority" external for the communications environment concerned or can form a part or component of one of the communications environments in question.

Moreover, the multinet session management according to the present invention allows any combination of contexts of communications/session in real-time to update the combination information of the multinet management session according to the present invention. For example, as soon as a session is initiated or terminated, the multinet session management according to the present invention provides for respective information.

Furthermore, the multinet session management according to the present invention enables access communications environments for which, with which or in which the multinet management according to the present invention is used with virtually no limits. In other words, the multinet session management according to the present invention does not impose any restrictions to the access of communications environments in question such that, for example, the number of devices, units and systems used in a communications environment is virtually unlimited. This is mainly due to the fact that the multinet session management according to the present invention primarily registers communications/sessions in different communications environments. Communications/sessions as such are not performed by the multinet session management according to the present invention.

For respectively obtaining communication/session and context related information, the multinet session management according to the present invention employs hardware and/or software means (e.g. devices, units, systems, methods, software program products) to contact to communications environments in question in such a manner that the multinet session management can obtain its requested information. Such contacts or connections can be obtain by means of hardware and/software interfaces, gateways, nodes, network cards and other connecting means.

A possible embodiment of the multinet session management according to the present invention is a computer unit or a system having interface means which allow for a connection to communications environments and respective software means to implement the principals according to the present invention. The interface means, for example an Internet interface, will support connections to communications environments with different characteristics, for example for connection to a telephone communications environment and the Internet. The software means can be embodied in any computer programming language (e.g. "C++") and provides for some functions for the management of communication/sessions in different communications networks. In particular, functions for registration of communications/sessions in different communications environments, deleting of respective communications/session information also with regard to particular communications environments and for searching/retrieving of communications/sessions of a particular user for example of communications/sessions which are associated/related to each other. Communications between communications environments and the multinet session management according to the present invention can be carried out on the basis of various techniques, for example CORBA, SOAP, HTTP(S), etc.

In particular, the present invention provides a multinet session management device for registration of communications of a specific entity in at least two communications environments.

In this context, the term "specific entity" refers to a person, a company or any other entity including a specific user of the communications environments, a specific address related to the communications in the communications environments, a specific location to and from which communications in the communications environments are performed, a specific end user unit for the communications in the communications environment etc.

In order to obtain information for the registration of the communications, the multinet session management device can comprise means for connecting to the at least two communications environments. With respect to different properties, characteristics and standards of different communications environments, it is contemplated that the multinet session management device comprises connecting means for each of the at least two communications environments.

For storing information characterizing registered communications, the multinet session management device can comprise a memory comprising e.g. RAMs, hard disks, mass storage devices, storage tapes and the like.

Searching, tracing, finding, and the like of a specific communication of the specific entity (e.g. single particular communications, communications related to a specific context and a like) can also be executed by the multinet session management device.

Usually, communications in communications environments are not rejected to communications of a specific entity. Thus, the multinet session management advice can comprise means for determining or identifying from any communications in the at least two communications environment which thereof are associated to and/or performed by the specific user.

According to a preferred embodiment the multinet session management device provides for a registration for communications of the specific entity which are performed by end user units specifically adapted for communications in one of the communications environments.

Further, the present invention provides a telecommunication web site which implements the registration of communications of a specific entity in at least to communications environments and embodiments thereof as described above with the respect to the multinet session management device.

In particular it is contemplated that the telecommunications web site according to the present invention is a telecommunications web site to which the specific entity is associated to.

The terms "web site" and "web page" defined sites and sub-sites associated thereto which can uniquely addressed by means of a single address like a telephone number, and IP address and URL and the like. Preferably the telecommunications web site according to the present invention is a web site having a specific URL would can be access by the Internet.

The telecommunications web site can include one or more web pages which form part (s) thereof. Particularly, the telecommunications web site is assigned to, personalized for or corresponding to a specific entity examples for which are given above.

For providing the information concerning the registered communications, the telecommunications web site can comprise respective means, e.g. graphical user interface, and/or employed respective measures.

The above object underlying the present invention is also solved by a telecommunications web site being operatively connected or comprising the multinet session management device as described above, by a communications environment comprising or being operatively connected to the multinet session management device according to the present invention or comprising units, means and the like for implementing or carrying out the registration of communications of a specific entity in at least to communications environment according to the present invention.

### Short description of the invention

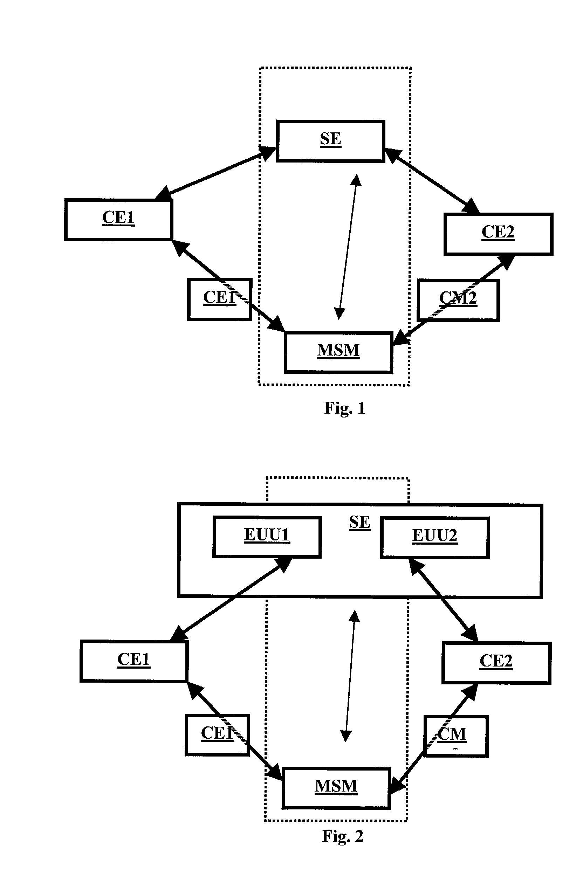

In the following description of preferred embodiments it is referred to the enclosed figures wherein fig. 1 to 4 illustrated different embodiments according to the present invention.

### Description of preferred embodiments

Fig. 1 illustrates a specific entity which executes/performs a communications by means of a first communications environment CE 1 and by means of a second communications environment CE 2. For such communications, the specific entity SE can employ an end user unit (not indicated in this figure) capable of providing for communications with the respect to both the first and the second communications environment CE 1 and CE 2.

By means of connecting units CM1 and CM2 , such as gateways, interfaces and the like, multinet session management device MSM can obtain information from these communications environments with the respect to communications performed therein by the specific entity SE. To be able to identify communications within these communications environments, the multinet session management device MSM can be provided information characterizing the specific entity SE and communications thereof, respectively. This can be accomplished by providing such information from the specific entity SE to the multinet session management device MSM (which is illustrated in that figure by the arrow between the specific entity SE and the multinet session management device MCM) or from a database (not shown in this figure) to which the multinet session management device MSM can access.

In order to make communications related information form the multinet session management device MSM available/ accessible, such information can be communicated via one of the communications environments CE1 and CE2 to the specific entity SE upon request from the specific entity SE and/or under control of the multinet session management device MSM.

Further, as indicated by the arrow between the specific entity SE and the multinet session management device MCM, such information can also be communicated directly. This can be accomplished by an access of the specific entity SE directly to the multinet session management device MCM ("data pull") and/or by sending/forwarding from the multinet session management device MCM ("data push"). Communications links for the latter case comprise, telephone links/lines, Internet links and the like. Moreover, it is possible that the multinet session management device MCM is comprised by the specific entity SE (this is illustrated in Fig. 1 by the dotted line surrounding the specific entity SE and the multinet session management device MCM). Then, such information will be inherently available for the specific entity SE.

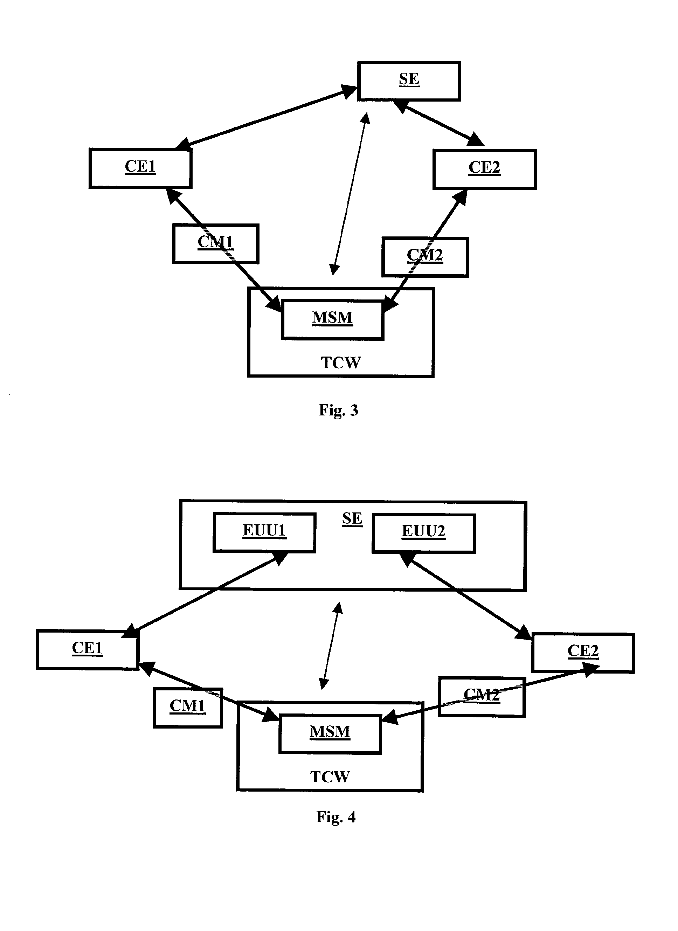

In Fig. 2, an embodiment is illustrated wherein the specific entity SE employs different end user units, namely a first end user unit EUU 1 and the second end user unit EUU 2, for respectively executed communications by means of the first communications environment CE 1 and the second communications environment CE 2.

Although Fig. 1 and 2 illustrate just two different communications environments, the observations given above correspondingly apply for a specific entity communicating by means of three, four, five etc. communications environments. This is also true for the number of end user units associated to a specific entity. Also, the multinet session management device MSM is capable of a registration of communications of any number of the specific entity without limiting the number of end user units and/or communications environments.

Fig. 3 illustrates an embodiment wherein a telecommunications web site TCW comprises a multinet session management MSM. The multinet session management of the telecommunications web site TCW can be embodied as hardware/software components thereof or can be a multinet session management device operatively connected to the telecommunications web site. There observations given above with the respect to the multinet session management, the specific entity SE, first and second communications environments CE 1 and CE 2 and the connecting means CM1 And CM2 also apply here. Further, the use of a telecommunications web site TCW allows to provide information generated by the multinet session management MSM in a more enhanced manner. Since the telecommunications web site TCW is uniquely associated to the specific entity SE, the provision of such information can be integrated in information and interaction conventionally provided by the telecommunication web site TCW to the specific entity SE.

Comparably to fig. 2, fig. 4 illustrates an embodiment, therein the specific entity employs two end user units EUU 1 and EUU 2 for respectively communicating we are the first and the second communications environment CE 1 and CE 2. As in fig. 3, a telecommunication web site TCW is employed which integrates or implements a multinet session management MSM or is operatively assigned/associated/connected thereto.

## Claims

1. A device for multinet session management, the device being for registration of communications of a specific entity (SE) in at least two communications environments (CE1, CE2).

2. The device according to claim 1, comprising means (CM1, CM2) for connecting to the at least two communications environments (CE1, CE2).

3. The device according to claim 2, comprising the connecting means (CM1, CM2) each thereof for connecting to a respective one of the at least two communications environments (CE1, CE2).

4. The device according to one of the preceding claims, comprising a memory unit for storing of data of registered communications of the specific entity (SE).

5. The device according to one of the preceding claims, for at least one of searching, tracing and finding at least one of the communications of the specific entity (SE) in at least one of the at least two communications environments (CE1, CE2).

6. The device according to one of the preceding claims, comprising means for determining from communications performed in at least one of the at least two communications environments (CE1, CE2) communications which are associated to the specific entity (SE).

7. The device according to one of the preceding claims, for registration of communications of the specific entity (SE) performed by means of at least two end user units (EUU1, EUU2) associated to the specific entity (SE) each thereof for use in a respective one of the at least two communications environments (CE1, CE2).

8. The device according to one of the claims 8 to 11, for providing information with respect to registration of communications of the specific entity (SE) to the specific entity (SE).

9. A telecommunications web site (TCW) associated to a specific entity (SE), comprising a multinet session manager (MCM) for registration of communications of the specific entity (SE) in at least two communications environments (CE1, CE2).

10. The telecommunications web site according to claim 9, being adapted to be connected to the at least two communications environments (CE1, CE2).

11. The telecommunications web site according to claim 10, being operatively connected to means (CM1, CM2) for connecting to the at least two communications environments (CE1, CE2).

12. The telecommunications web site according to claim 10 or claim 11, being adapted to be connected to each of the at least two communications environments (CE1, CE2) in a separate manner.

13. The telecommunications web site according to one of the claims 9 to 12, for providing information with respect to registration of communications of the specific entity (SE) to the specific entity (SE).

14. The telecommunications web site according to one of the claims 9 to 13, for receiving information **characterizing** at least one of the communications of the specific entity (SE) to be searched for in at least one of the at least two communications environments (CE1, CE2).

15. The telecommunications web site according to claim 14, wherein the **characterizing** search information is provided by the specific entity (SE).

16. The telecommunications web site according to one of the claims 9 to 15, being comprised of one of the at least two communications environments (CE1, CE2).

17. The telecommunications web site according to one of the claims 9 to 16, for registration of communications of the specific entity (SE) at least partially performed by means of the telecommunications web site (TCW).

18. A telecommunications web site (TCW), being operatively connected to the multinet session management device (MCM) according to one of the claims 1 to 7.

19. A communications environment, comprising a multinet session management device (MCM) for registration of communications of a specific entity (SE) in the communications environment (CE1) and communications of the specific entity (SE) in another communications environment (CE2).

20. The communications environment according to claim 19, wherein the multinet session management device (MCM) comprises means (CM2) for connecting to the other communications environment (CE2).

21. The communications environment according to claim 19 or 20, wherein the multinet session management device (MCM) comprises a memory unit for storing information **characterizing** registered communications of the specific entity (SE).

22. The communications environment according to one of the claims 19 to 20 wherein the multinet session management device (MCM) is for at least one of searching, tracing and finding at least one of the communications of the specific entity (SE).

23. The communications according to one of the claims 19 to 22, wherein the multinet session management device (MCM) comprises means for determining from communications performed in at least one of the communications environments (CE1) and the other communications environment (CE2) communications which are associated to the specific entity (SE).

24. The communications environment according to one of the claims 19 to 23, comprising
at least one end user unit (EUU1) associated to the specific entity (SE) for communications in the communications environment (CE1).

25. A communications environment comprising
at least one telecommunications web site having the features defined in one of the claims 9 to 18.

26. A communications environment,
comprising the multinet session management device according to one of the claims 1 to 8 or being operatively connected to the multinet session management device according to one of the claims 1 to 8.

27. A method for registration of communications of a specific entity (SE) in at least two communications environments (CE1, CE2) by means of the multinet session management device according to one of the claims 1 to 8 or by means of the telecommunications web site (TCW) according to one of the claims 9 to 18 or within the communications environment according to one of the claims 19 to 26.

28. The method according to claim 26, being
adapted to control the multinet session management device according to one of the claims 1 to 7 or the telecommunications web site according to one of the claims 8 to 17 or the communications environment according to one of the claims 18 to 26 at least partially.

29. A software program product, comprising
program code portions for carrying out the method according to claim 26 or claim 27.
